# EUROPÄISCHE PATENTSCHRIFT

(11) **EP 1 083 147 B1**
(45) Veröffentlichungstag und Bekanntmachung des Hinweises auf die Patenterteilung: **02.08.2006**
(21) Anmeldenummer: 00118914.1
(22) Anmeldetag: 01.09.2000
(51) Int. Cl.: C01B 33/32, C11D 3/08, C11D 3/12, C11D 7/14

(54) **Hochalkalisches kristallines Natriumsilikat**
Highly alkaline crystalline sodium silicate
Silicate de sodium cristallin à haute alcalinité

(30) Priorität: 11.09.1999 DE 19943550
(43) Veröffentlichungstag der Anmeldung: 14.03.2001
(73) Patentinhaber: Clariant Produkte (Deutschland) GmbH, 65929 Frankfurt am Main (DE)
(72) Erfinder: Bauer, Harald, Dr., 50170 Kerpen (DE); Holz, Josef, Dr., 50374 Erftstadt (DE); Schimmel, Günther, Dr., 50374 Erftstadt (DE)

(56) Entgegenhaltungen:
- EP-A- 0 970 918
- WO-A-00/18859
- DE-A- 4 439 083
- US-A- 4 664 839
- US-A- 5 614 160
- US-A- 5 900 399

## Beschreibung

Gegenstand der Erfindung ist ein hochalkalisches kristallines Natriumsilikat, ein Verfahren zu seiner Herstellung und seine Verwendung in Wasch- und Reinigungsmitteln.

Kristalline schichtförmige Natriumsilikate (Schichtsilikate) der Formel NaMSiₓO_{2x .} yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind, haben sich als geeignete Ersatzstoffe für die Gerüststoffe Phosphat und Zeolith erwiesen. Die Verwendung solcher kristallinen Schichtsilikate zur Enthärtung von Wasser wird beispielsweise in der EP-A-0 164 514 beschrieben. Bevorzugte kristalline Schichtsilikate sind solche, in denen M für Natrium steht und x die Werte 2 oder 3 annimmt. Gleichermaßen können auch beta- und delta-Natriumdisilikate (Na₂Si₂O₅ ^{.} yH₂O) eingesetzt werden, wobei beta-Natriumdisilikat beispielsweise nach dem Verfahren der PCT/WO 91/08171 erhalten werden kann.

Waschmittelbuilder erfüllen eine Vielzahl von Funktionen. Darunter sind besonders die Entfernung oder Herabsetzung von Wasserhärte und die Lieferung von Alkalität, d.h. die Heraufsetzung des pH-Wertes in der Waschlauge zu nennen.

Die Entfernung der im Leitungswasser vorhandenen Wasserhärte ist wichtig, da sie bei den üblichen, insbesondere höheren Waschtemperaturen an Heizstäben, Waschmaschinenwänden und an Textilien Verkrustungen (Inkrustierungen) verursacht und die häufig eingesetzten anionischen Tenside in Form von sogenannten Kalkseifen zur Ausfällung bringt. Dies hat eine Minderung der Waschkraft zur Folge und führt bereits nach wenigen Waschgängen zu einem Grauschleier auf der Wäsche.

Die im allgemeinen erwünschte Erhöhung des pH-Wertes hat zur Folge, daß anorganische Partikel eine höhere Oberflächenladung erhalten und so leichter vom Gewebe zu entfernen sind. Hochalkalische Builder unterstützen so die Waschkraft der Tenside.

Es fehlt jedoch an Buildern bzw. Buildersystemen auf anorganischer Basis, die in der Lage sind, einen relativ hohen pH-Wert in der Waschlösung bereits nach nur kurzer Einwirkzeit im betreffenden wäßrigen System zu erzeugen.

Es ist daher Aufgabe der vorliegenden Erfindung, ein silikatisches Buildersystem zur Verfügung zu stellen, das eine hohe Gesamtalkalität besitzt und welches in der Lage ist, in einem wäßrigen System möglichst schnell einen möglichst hohen pH-Wert zu erzeugen.

Diese Aufgabe wird erfindungsgemäß gelöst durch ein hochalkalisches kristallines Natriumsilikat der Zusammensetzung

Na₂O * x SiO₂ * y H₂O

wobei x eine Zahl zwischen 1,2 und 2,1 und y eine Zahl zwischen 0 und 20 ist und das hochalkalische kristalline Natriumdisilikat zu 70 bis 98 Gew.-% aus schichtförmigen Dinatriumdisilikaten und zu 2 bis 30 Gew.-% aus nicht-schichtsilikatischen Natriumsilikaten der Formel

Na₂O * v SiO₂* w H₂O

in der v eine Zahl zwischen 0,05 und 2 und w eine Zahl zwischen 0 und 20 ist, besteht.

Bevorzugt ist v eine Zahl zwischen 0,1 und 1,95.

Besonders bevorzugt ist v eine Zahl zwischen 0,2 und 1,9.

Bevorzugt ist x eine Zahl zwischen 1,5 und 2,0.

Besonders bevorzugt ist x eine Zahl zwischen 1,6 und 1,95.

Bevorzugt besteht das schichtförmige Dinatriumdisilikat aus
1 bis 70 Gew.-% alpha-Dinatriumdisilikat,
0,5 bis 50 Gew.-% beta-Dinatriumdisilikat und
5 bis 98 Gew.-% delta-Dinatriumdisilikat.

Besonders bevorzugt besteht das schichtförmige Dinatriumdisilikat aus
5 bis 50 Gew.-% alpha-Dinatriumdisilikat,
1 bis 30 Gew.-% beta-Dinatriumdisilikat und
10 bis 90 Gew.-% delta-Dinatriumdisilikat.

Besonders bevorzugt besteht das schichtförmige Dinatriumdisilikat aus
7 bis 30 Gew.-% alpha-Dinatriumdisilikat,
3 bis 20 Gew.-% beta-Dinatriumdisilikat und
15 bis 77 Gew.-% delta-Dinatriumdisilikat.

Bevorzugt enthält das hochalkalische kristalline Natriumsilikat, bezogen auf den Alkalisilikatgehalt, bis zu 10 Gew.-% an weiteren Bestandteilen.

Bevorzugt handelt es sich bei den weiteren Bestandteilen um kationische und/oder anionische Bestandteile.

Bevorzugt handelt es sich bei den kationischen Bestandteilen um Alkalimetallionen und/oder Erdalkalimetallkationen und/oder Fe, W, Mo, Ta, Pb, Sn, Al, Zn, Ti, V, Cr, Mn, Co und/oder Ni.

Bevorzugt handelt es sich bei den anionischen Bestandteilen um Sulfate, Fluoride, Chloride, Bromide, Iodide, Carbonate, Hydrogencarbonate, Nitrate, Oxidhydrate, Phosphate und/oder Borate.

Bevorzugt enthält das hochalkalische kristalline Natriumsilikat bis zu 10 Mol-% Bor, bezogen auf den Gesamtgehalt an SiO₂.

Bevorzugt enthält das hochalkalische kristalline Natriumsilikat bis zu 50 Mol-% Phosphor, bezogen auf den Gesamtgehalt an SiO₂, enthält.

Die vorgenannten Stoffe können auch als Verbindungen auftreten.

Bevorzugt weist das hochalkalische kristalline Natriumsilikat als Pulver einen mittleren Teilchendurchmesser von 0,1 bis 600 µm auf.

Bsonders bevorzugt weist das hochalkalische kristalline Natriumsilikat als Pulver einen mittleren Teilchendurchmesser von 0,1 bis 150 µm auf.

Bevorzugt weist das hochalkalische kristalline Natriumsilikat als kompaktiertes Granulat einen mittleren Teilchendurchmesser von 10 bis 2000 µm auf.

Die Erfindung betrifft auch ein Verfahren zur Herstellung von hochalkalischen kristallinen Natriumsilikaten, dadurch gekennzeichnet, daß man ein Natriumsilikathaltiges Ausgangsmaterial bei einer Kristallisationstemperatur von 700 bis 1300 K zur Kristallisation bringt.

Bevorzugt handelt es sich bei dem Natriumsilikathaltigen Ausgangsmaterial um Wasserglas.

Besonders bevorzugt beträgt die Kristallisationstemperatur 800 bis 1200 K und insbesondere 900 bis 1100 K.

Das Verfahren kann vorzugsweise auch so ausgeführt werden, daß man nichtschichtsilikatische Natriumsilikate mit Schichtsilikaten rollkompaktiert.

Erfindungsgemäß werden die als Wasserenthärter fungierenden Natriumschichtsilikate in besonders feiner Verteilung in einer Natriumsilikatumgebung verteilt.

Diese besonders feine Verteilung kann erfolgen, indem nicht schichtsilikatische Natriumsilikate mit besonders hohem Alkaligehalt mit den Schichtsilikaten rollkompaktiert werden. Durch die innige Verpressung unter hohem Druck werden die Materialkörner zermahlen und vermischt. Resultat ist ein granulares hochreaktives Buildermaterial.

Erfindungsgemäß kann die feine Verteilung auch erreicht werden, indem man die Gesamtalkalität des Materials im Ausgangsprodukt einstellt und dann die Natriumschichtsilikate unter geeigneten Bedingungen zur Kristallisation bringt. Geeignete Kristallisationsbedingungen sind beispielsweise Temperaturen von 450 bis 900°C, bevorzugt 660 bis 760°C. Als Apparate eignen sich z.B. Muffelöfen, Wirbelbetten, Bandöfen und Drehrohröfen. Die Natriumschichtsilikate kristallisieren dann in stöchiometrischer Zusammensetzung aus der Matrix aus und werden ummantelt von hochalkalischem Alkalisilikat das nicht kristallisiert, sondern amorph ist.

Die Gesamtalkalität des Ausgangsproduktes kann man erfindungsgemäß einstellen durch Zugabe von Natriumhydroxid (in fester oder flüssiger Form), Alkalihydroxiden allgemein, Alkalicarbonaten (Soda, Pottasche) und Alkalisilikaten zum Ausgangsprodukt. Erfindungsgemäße Alkalisilikate können nichtstöchiometisch zusammengesetzte Alkalisilikate (Wasserglaslösungen, amorphe Alkalisilikate, Festwassergläser) sein, bevorzugt sind die Salze des Natriums.

Erfindungsgemäß einsetzbare amorphe Alkalisilikate sind in festem Aggregatzustand und zeigen im Röntgenpulverdiffraktogram typischerweise keine scharfen Reflexe, die einer geordneten Kristallstruktur zuzuordnen wären, sie besitzen auch keine stöchiometrische Zusammensetzung. Vielmehr läßt sich das Verhältnis von SiO₂ zu Na₂O in weiten Grenzen einstellen. Die nicht durch Natriumgegenionen abgesättigten Valenzen des Silicates liegen in Form von Si-OH-Hydroxyl-gruppen vor. Sie können auch Kristallwasser enthalten.

Festwassergläser sind feste erstarrte glasartige Schmelzen. Sie zeigen im Röntgenpulverdiffraktogram typischerweise ebenfalls keine scharfen Reflexe, die einer geordneten Kristallstruktur zuzuordnen wären, sie besitzen auch keine stöchiometrische Zusammensetzung. Vielmehr läßt sich das Verhältnis von SiO₂ zu Na₂O in weiten Grenzen einstellen. Sie sind wasserfrei.

Erfindungsgemäß können zur Kompaktierung (Überführung in die granulare Form) die Verfahren Rollkompaktierung, Brikettierung etc eingesetzt werden. Bei der Rollkompaktierung ist ein Preßdruck von 10kN/cm bis 100kN/cm bevorzugt und eine Preßdruck von 30kN/cm bis 80kN/cm besonders bevorzugt.

Eine weitere Möglichkeit zur Verbesserung der Geschwindigkeit der Alkalifreisetzung ist, das getemperte Material besonders fein zu mahlen. Bevorzugte mittlere Teilchendurchmesser liegen zwischen 1 und 80 µm. Derartige Mahlungen können mit Luftstrahlmühlen, Kugelmühlen, Pendelrollenmühlen etc durchgeführt werden.

Die Erfindung betrifft auch Wasch und Reinigungsmittel welche ein erfindungsgemäßes hochalkalisches kristallines Natriumsilikat enthalten.

Bevorzugt enthält das Wasch- und Reinigungsmittel
0,5 bis 98 Gew.-% hochalkalisches kristallines Natriumsilikat,
0,5 bis 80 Gew.-% Cobuilder,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% Cobuilder,
0,5 bis 80 Gew.-% pH-Regulatoren,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% Cobuilder,
0,5 bis 80 Gew.-% pH-Regulatoren,
1 bis 50 Gew.-% grenzflächenaktive Substanzen,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% Cobuilder,
0,5 bis 80 Gew.-% pH-Regulatoren,
1 bis 50 Gew.-% grenzflächenaktive Substanzen,
1 bis 70 Gew.-% Bleichsystem,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% Cobuilder,
0,5 bis 80 Gew.-% pH-Regulatoren,
1 bis 70 Gew.-% Bleichsystem,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% pH-Regulatoren,
1 bis 50 Gew.-% grenzflächenaktive Substanzen,
1 bis 70 Gew.-% Bleichsystem,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% pH-Regulatoren,
1 bis 70 Gew.-% Bleichsystem,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% pH-Regulatoren,
1 bis 40 Gew.-% grenzflächenaktive Substanzen,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
0,5 bis 80 Gew.-% pH-Regulatoren,
ad 100 Gew.-% weitere übliche Inhaltsstoffe.

Bevorzugt enthält das Wasch- und Reinigungsmittel
0,5 bis 98 Gew.-% hochalkalisches kristallines Natriumsilikat,
1 bis 70 Gew.-% Bleichsystem,
ad 100 Gew.-% weitere übliche Inhaltsstoffe.

Bevorzugt enthalten die vorgenannten Wasch- und Reinigungsmittel 1 bis
50 Gew.-% an hochalkalischem kristallinem Natriumsilikat.

Bevorzugt enthalten die vorgenannten Wasch- und Reinigungsmittel 3 bis
30 Gew.-% an hochalkalischem kristallinem Natriumsilikat.

Bevorzugt enthalten die vorgenannten Wasch- und Reinigungsmittel aber auch 60 bis 98 Gew.-% an hochalkalischem kristallinem Natriumsilikat.

Bevorzugt enthalten die vorgenannten Wasch- und Reinigungsmittel dann 70 bis 98 Gew.-% an hochalkalischem kristallinem Natriumsilikat.

Bevorzugt handelt es sich bei dem Cobuilder um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate. Zu den Aluminosilikaten gehören insbesondere die Zeolithe A, P und X.
Bevorzugt handelt es sich bei dem Bleichsystem um Aktivchlor- und/oder Aktivsauerstoffträger, Bleichaktivator, -katalysator, zur Entfermung von Verfärbungen einsetzbare Enzyme, Perborat und/oder Percarbonat.

Bevorzugt handelt es sich bei den grenzflächenaktiven Substanzen um anionische, kationische, nicht-ionische und/oder zwitterionischeTenside.

Bevorzugt handelt es sich bei den pH-Regulatoren um Soda, Citronensäure, Natriumcitrat und/oder Bicarbonat.

Die erfindungsgemäßen hochalkalischen kristallinen Natriumsilikate können erfindungsgemäß Verwendung finden in Wasch- und Reinigungsmitteln. Bevorzugt sind hier Voll-, Color- und Spezialwaschmittel. Vollwaschmittel sind ausgewogene Formulierungen mit dem Ziel einer möglichst hohen Waschwirkung. Colorwaschmittel sollen vor allem Farbtextilien schonen hinsichtlich Ausbleichen und Verwaschen der Farben und Verfilzen der Fasern. Spezialwaschmittel zielen auf enge Anwendungsgebete wie Fleckensalze, Gardinenwaschmittel, Wollwaschmittel etc. Buildersilikate können weiterhin Anwendung finden in Wasserenthärtern, die vor allem in Regionen mit hoher Wasserhärte einen leistungssteigernden Effekt auf das Waschergebnis und einen Schutzeffekt hinsichtlich der Waschmaschine besitzt. Weitere Anwendungen sind Maschinengeschirreiniger. Hier sind Silikate vor allem wegen Ihrer guten Schmutzdispergierung, ihrer hohen Alkalität für eine gute Reinigungswirkung und wegen ihrer Schutzwirkung gegen Korrosion von Gläsern gefragt.

Voll-, Color- und Spezialwaschmittel können bevorzugt in pulverförmiger oder granularer Form angewendet werden. Eine bevorzugte Ausführungsform ist auch die Tablettenform. Dazu wird die Waschmittelformulierung gemischt und mit einer Tablettenpresse in entsprechende Form gepresst. Die Form kann dabei zylinderförmig, quaderförmig oder auch weitgehend beliebige geometrische Formen annehmen. Im Falle des Zylinders kann das Verhältnis von Radius zu Höhe zwischen 0,25 bis 4 betragen. Der Pressdruck kann zwischen 12 und 0,3 kN/cm² betragen. Bevorzugt ist auch die mehrstufige Verpressung. Hierbei werden beliebige Anteile der Formulierung in mehren Schritten nacheinander aufeinander gepresst, so daß sich mehrere Schichten ergeben. Besonders bevorzugt ist dabei ein Volumenverhältnis bei zweischichtigen Tabletten von 1 zu 10 bis 10 zu 1.

### Bestimmung des Calciumbindevermögens (CBV)

Eine Mischung aus einer Puffer-Stammlösung und deionisiertem Wasser werden in einem ErWeKa Disolutiontester vorgelegt, gerührt und auf 30°C temperiert. Die Puffer-Stammlösung ist eine wässrige Lösung von Glycin, Natriumchlorid, Calciumchlorid und Natriumhydroxid in geeigneten Konzentrationen. Die Calciumsensitive Elektrode Modell 932001 der Fa. Orion wird in die Lösung eingetaucht und durch Aufstockung der Lösung mit weiterer Calcium-Stammlösung geeicht. Das geschieht mit der Auswerteeinheit EA 940 der Fa. Orion. Nach der Aufstockung enthält die Lösung eine Wasserhärte von 17 Grad deutscher Wasserhärte. Gleichzeitig mit Zugabe der Untersuchungssubstanz (1g) wird das Orion EA 940 gestartet. Der pH-Wert der Meßlösung beträgt 10,2. Das Orion EA 940 gibt in bestimmten Zeitabständen die Konzentration an freien Calciumionen aus. Mit Hilfe der bekannten Einwaage an Calcium wird aus der Konzentration der freien, nicht gebundenen Calciumionen nach 10 min auf die Menge gebundenen Calciums, das Calciumbindevermögen, geschlossen. Dies wird in mg CaCO₃/g angegeben.

### Bestimmung des Molverhältnisses SiO₂ zu Na₂O

Eine Probe von 1,3 g Natriumsilikat wird in ca 100ml demineralisiertes Wasser gegeben und durch 30 minütiges Rühren bei 50°C vollständig in Lösung gebracht. Dann wird die Menge Natriumoxid und Siliziumdioxid durch Titration bestimmt und der Molmodul berechnet, indem man die molaren Mengen zueinander ins Verhältnis setzt.
a) Natriumoxid Menge: Diese wird bestimmt indem man o.g. Lösung in einem Sensolab-Titrator der Fa. Sensen Systems potentiometrisch bei Raumtemperatur mit 1N Salzsäure titriert.
b) Siliziumdioxid Menge: Die Lösung aus a) wird mit 85 ml ca. 4%ige wässrige Lösung von Natrimfluorid versetzt und mit dem gleichen Apparat wiederum potentiometrisch bei Raumtemperatur mit 1 N Salzsäure titriert. Dabei werden je mol Siliziumdioxid 4 mol Natriumhydroxid freigesetzt und folgerichtig auch 4 mol Salzsäure verbraucht.

   H₂SiO₃ + 6NaF + H₂O ---> Na₂SiF₆ + 4 NaOH

   4NaOH + HCl ---> 4 H₂O + 4NaCl

### Bestimmung der Phasenzusammensetzung

Die gemörserte Feststoffprobe wird in einem Röntgenpulverdiffraktometer Philips PW1710 vermessen (Cu K alpha 2-Strahlung, Wellenlänge 1,54439 Angström, Beschleunigungs- spannung 35kV, Heizstrom 28 mA, Monochromator, Scangeschwindigkeit 3 Grad 2 theta pro Minute).
Die erhaltenen Intensitäten werden wie folgt ausgewertet.

| Substanz | charakteristischer Peak (d-Wert in Angström) | Quelle |
|---|---|---|
| Alpha-Phase | 3,29 +/- 0,07, typisch 3,31 | SKS-5 in EP 0 164 552, hkl 140 von JCPDS Nr. 22-1397 (aber auch 19-1233, 19-1234, 19-1237) |
| Beta-Phase | 2,97 +/- 0,06 | SKS-7 in EP 0 164 552, hkl 400 von JCPDS Nr. 29-1261 (aber auch 19-1236, 23-0529) |
| Delta-Phase | 3,97 +/- 0,08 | SKS-6 in EP 0 164 552, hkl 120 von JCPDS Nr. 22-1396 |

JCPDS Nummern beziehen sich auf Referenzdiffraktogramme von Substanzen gelistet von dem Joint Commitee of Powder Diffraction Standards.

Die Gehalte in Prozent errechnen sich aus den Intensitäten Iₐ, I_{b}, I_{d} - gemessen in Impulsen - der alpha, beta, delta Phasen nach folgenden Formeln:
Alpha-Gehalt: A [%] = 100*Iₐ/(Iₐ+I_{b}+I_{d})
Beta-Gehalt: B [%] = 1,41*100*I_{b}/(Iₐ+I_{d})
Delta-Gehalt: D [%] = 100 - A - B

Zur Bestimmung Anteils an nicht schichtsilikatischem Natriumsilikat (AM) wird der Untergrund (Iₐₘ in Impulsen) des Röntgenpeaks bei einem d-Wert von 2,65 Angström bestimmt und mit folgender empirischen Formel in den Prozentgehalt umgerechnet.
AM [%] = (Iₐₘ-70)*100/450

### Bestimmung der Kornverteilung durch Siebanalyse

In eine Siebmaschine der Fa. Retsch werden die Einsätze mit gewünschten Sieben eingesetzt. Dabei nimmt die Maschenweite der Siebe von oben nach unten ab. 50 g des zu untersuchenden Pulvers werden auf das weiteste Sieb aufgegeben. Durch die Schwingbewegung der Siebmaschine wird das Pulvermaterial durch die verschiedenen Siebe befördert. Die Rückstände auf den Sieben werden ausgewogen und rechnerisch auf die Materialeinwaage bezogen. Aus den Werten kann der d₅₀-Wert berechnet werden.

### Kompaktieren von Natriumsilikaten

In einem Rollkompaktor (Firma Hosokawa-Bepex, Typ: L200/50P) wird das Ausgangsmaterial mit Hilfe einer Stopfschnecke zwischen die Kompaktorwalzen befördert (Einstellung: Stufe 5). Dies geschieht so schnell, daß bei einer Auflagelänge von 50mm ein Preßdruck von 140 bis 160 kN entsteht. Die Walzenumdrehung wird auf Stufe 3 bis 7 gestellt der Walzenspalt beträgt 0,1 mm. Die entstehenden Schülpen (Länge: ca. 50mm, Dicke: ca. 2-5 mm, Breite ca. 10-15 mm) werden in einer Hammermühle (Fa. Alpine, Typ UPZ) mit einem Sieblochdurchmesser von 5mm bei einer Umdrehungszahl von 600 bis 1400 Upm gebrochen. Vom gebrochenen pulverförmigen Produkt werden Überkorn (mit Sieb mit Lochdurchmesser 1,4 mm) und Unterkorn (Lochdurchmesser 0,25mm) abgetrennt.

### Herstellung der Testwaschmittel

Die optischen Aufheller werden in einem Viertel der Alkylethoxylat-Menge angerührt und im Haushalts-Multimixer (Fa. Braun) mit der Hälfte der Sodamenge gemischt. Im Pflugscharmischer der Fa. Lödige wird der Rest Soda und die Gesamtmengen Zeolith und Polymer 15 Minuten bei 300 U/Min. gemischt. Dann wird die Hälfte des restlichen Nonionic in 5 Minuten aufgesprüht. Dann wird das Silikat zugegeben und 10 Minuten gemischt. Dann wird die restliche zweite Hälfte Alkylethoxylat (AE) in weiteren 5 Minuten aufgesprüht. Schließlich werden LAS, Seife, Antischaum, Phosphonat und optische Aufheller zugegeben und 10 Minuten bei 300 U/Min. nachgemischt. Im Taumelmischer wird die Mischung aus dem Lödigemischer unter geringer Scherbelastung mit Perborat, TAED und Enzymen versetzt und 15 Minuten vermischt.

### Herstellung der Waschmitteltabletten

Die Testwaschmittel wurde zunächst wie in der allgemeinen Vorschrift "Herstellung der Testwaschmittel" beschrieben in pulver- bis teilweise granularer Form hergestellt. In Portionen zu 40g wurden daraus in einer Laborpresse (Pressfläche 15 cm²) Tabletten gepresst. Der Pressdruck betrug182 kN bis 5kN.

### Herstellung der Maschinengeschirreiniger

In einem Pflugscharmischer der Fa. Lödige wurden die Komponenten Phosphat, Silikat, Soda, Natriumcitrat, Polymer vorgelegt und gut gemischt. Dann wird das Alkylethoxylat aufgesprüht. Enzyme, Parfüm, Percarbonat oder Perborat und TAED werden zum Schluß untergemischt.

### Waschversuche

In einer haushaltsüblichen Waschmaschine (Typ: Novotronic 927 WPS, Fa. Miele) werden bei 60°C und einer Wasserhärte von 18°dH spezielle Testgewebe mit einem Testwaschmittel bei einer Dosierung von 65, 100 bzw. 135 g/Waschgang wiederholt (15 mal) gewaschen. Den Testgeweben, dies sind insbesondere ein Baumwollfrottee- (Fa. Vossen), jeweils ein Baumwolldoppelripp-, Polyester/Baumwolle-Mischgewebe (Typ 20A) und Standardbaumwollgewebe (Typ 10A) der Fa. Wäschereiforschung Krefeld Testgewebe GmbH und ein Standardbaumwollgewebe der Eidgenössischen Materialprüfanstalt St. Gallen, Schweiz, wird weiterer Wäscheballast (3,75 kg) beigefügt. Nach 15 Wäschen wird von jedem der Gewebe eine Probe genommen und diese in einem Muffelofen bei einer Temperatur 1000°C und einer Zeitdauer von 24 Stunden verascht.

### Bestimmung des zeitabhängigen pH-Verlaufs

In einem ERWEKA Dissolution Tester werden unter Rühren 999 g demineralisiertes Wasser (oder demineralisiertes Wasser das mit Calciumchlorid dihydrat auf eine Wasserhärte von 17°dH eingestellt wurde) auf 20°C temperiert. Dann wird 1g Probensubstanz zugegeben und mit einer Schott pH-Elektrode (Typ H61) und einem Sensolab-Titrator der Fa. Sensen Systems der pH-Wert zeitabhängig abgelesen. Im vorliegenden Fall wird der pH-Wert nach 2 min abgelesen.

### Beispiel 1 (Vergleich)

Von einem kommerziellen SKS-6 Pulver der Fa. Clariant wurde der pH-Wert nach 2 min in demineralisiertem Wasser (17°dH Wasser) bestimmt.

### Beispiel 2 (Vergleich)

Von einem kommerziellen SKS-6 Granulat der Fa. Clariant wurde der pH-Wert nach 2 min in demineralisiertem Wasser (17°dH Wasser) bestimmt.

### Beispiel 3

Es wurden 14 kg amorphes Disilikat (Na₂O*2SiO₂, Silikat Aktivgehalt, 82,5%ig, Rest Wasser, Fa. Clariant France) mit 3,28 kg gemahlenem wasserfreiem Metasilikat (Fa. v. Baerle) gemischt und in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert. Danach wurde das Material entsprechend der allgemeinen Vorschrift zur Kompaktierung von Natriumsilikaten kompaktiert (Ausgangsmaterial: 10 kg, Granulat: 4,5 kg, Überkorn: 2,5 kg, Unterkorn: 3 kg).

### Beispiel 4

Es wurden 5 kg SKS-6 Pulver mit 425 g Natronlauge (50%) in einem Pflugscharmischer der Fa. Lödige gemischt und entsprechend der allgemeinen Vorschrift zur Kompkatierung kompaktiert (Ausgangsmaterial: 5 kg, Granulat: 1,9 kg, Überkorn: 2,0 kg, Unterkorn: 1,1 kg.

### Beispiel 5 .

1600 kg Wasserglas mit einem Verhältnis SiO₂/Na₂O von 1,9 und einem Aktivstoffgehalt von 42,48% wurde in einem Sprühturm der Fa. Kestner (Eintrittstemperatur: 195°C, Flüssigkeitstemperatur: 60°C, Luftaustrittstemperatur: 108°C) sprühgetrocknet zu einem amorphen Natriumsilikat mit einem Aktivsubstanzgehalt von 82 %. 15 kg des amorphen Natriumsilikates werden in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

### Beispiel 6

2400 kg Wasserglas mit einem Verhältnis SiO₂/Na₂O von 1,8 und einem Aktivstoffgehalt von 42,3% wurde in einem Sprühturm der Fa. Kestner (Eintrittstemperatur: 195°C, Flüssigkeitstemperatur: 60°C, Luftaustrittstemperatur: 108°C) sprühgetrocknet zu einem amorphen Natriumsilikat mit einem Aktivsubstanzgehalt von 83 %. 15 kg des amorphen Natriumsilikates werden in einem Muffelofen (Fa. Nabertherm, Typ W1000/H) bei 720°C 90 min getempert. Das erkaltete Material (ca. 10 kg) wird mit einem Backenbrecher und einer Scheibenmühle pulverisiert.

### Beispiel 7

250 kg des amorphen Natriumsilikates aus Beispiel 5 werden in einem Drehrohrofen der Fa. Babcock (Durchmesser 400 mm, Länge 5300 mm) bei 750°C getempert. Nach Mahlung des erkalteten Materials werden ca. 200 kg Produkt erhalten. Von diesem Material werden 180 kg entsprechend der allgemeinen Vorschrift zur Kompaktierung von Natriumsilikaten kompaktiert. Es werden 52 kg Gutkorn, 69 kg Überkorn, 59 kg Unterkorn erhalten.

### Beispiel 8

250 kg des amorphen Natriumsilikates aus Beispiel 6 werden in einem Drehrohrofen der Fa. Babcock (Durchmesser 400 mm, Länge 5300 mm) bei 750°C getempert. Nach Mahlung des erkalteten Materials werden ca. 200 kg Produkt erhalten. Von diesem Material werden 180 kg entsprechend der allgemeinen Vorschrift zur Kompaktierung von Natriumsilikaten kompaktiert. Es werden 45 kg Gutkorn, 74 kg Überkorn, 61 kg Unterkorn erhalten.

### Beispiel 9

Es wurden 5 kg SKS-6 Pulver mit 550 g wasserfreiem Natriummetasilikat gemischt und entsprechend der allgemeinen Vorschrift zur Kompaktierung kompaktiert (Ausgangsmaterial: 5 kg, Granulat: 1,5 kg, Überkorn: 2,4 kg, Unterkorn: 1,1 kg).

### Beispiel 10

Es wurden 5 kg SKS-6 Pulver mit 1,85kg wasserfreiem Natriummetasilikat gemischt und entsprechend der allgemeinen Vorschrift zur Kompaktierung kompaktiert (Ausgangsmaterial: 5 kg, Granulat: 2,1 kg, Überkorn: 2,0 kg, Unterkorn: 0,9 kg).

### Beispiel 11 (Vergleich)

Entsprechend der allgemeinen Vorschrift "Herstellung der Testwaschmittel" wurde ein Test-Ultracompact-Vollwaschmittel mit 12,0 % kommerziell käuflichem SKS-6 Granulat hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 2,94 %.

### Beispiel 12 (Vergleich)

Entsprechend der allgemeinen Vorschrift "Herstellung der Testwaschmittel" wurde ein Test-Ultracompact-Vollwaschmittel mit 31,0 kommerziell käuflichem SKS-6 Granulat hergestellt. Die Vorschrift wurde insoweit angepaßt, daß die otpischen Aufheller in Alkylethoxylat (AE) angerührt und mit der Hälfte der Sulfatmenge gemischt wird. Der Rest Sulfat und das gesamte SKS-6 Granulat werden gemischt und der Rest AE aufgesprüht. Im Taumelmischer werden Percarbonat, TAED und Enzyme untergemischt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 3,33 %.

### Beispiel 13

Entsprechend der allgemeinen Vorschrift "Herstellung der Testwaschmittel" wurde ein Test-Ultracompact-Colorwaschmittel mit 12,0 % Silikat aus Beispiel 3 hergestellt. Die Vorschrift wurde insoweit angepaßt, daß im Lödigemischer Zeolith, Silikat aus Beispiel 3, Polymer, Bicarbonat und Citronensäure 15 min gemisch und dann während 15 min unter Mischen mit AE besprüht werden. Im Taumelmischer werden Enzyme, Polyvinylpyrrolidon, Soil-release-polymer und CMC zugemischt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,80%.

### Beispiel 14

Entsprechend der allgemeinen Vorschrift "Herstellung der Testwaschmittel" wurde ein Test-Compact-Colorwaschmittel mit 5,0 % Silikat aus Beispiel 4 hergestellt. Die Vorschrift wurde insoweit angepaßt, daß im Lödigemischer Zeolith, Buildersilikat aus Beispiel 4 und Polymer mit der Gesamtmenge AE versetzt werden. LAS, Seife, Antischaum, Phosphonat, Polyvinylpyrrolidon, Soil-release-polymer und CMC werden nachgemischt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 2,05 %.

### Beispiel 15

Entsprechend der allgemeinen Vorschrift "Herstellung der Testwaschmittel" wurde ein Test-Ultracompact-Vollwaschmittel mit 12,0 % Silikat aus Beispiel 5 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,62 %.

### Beispiel 16

Entsprechend der allgemeinen Vorschrift "Herstellung der Testwaschmittel" wurde ein Test-Normal-Vollwaschmittel mit 7,4 % Silikat aus Beispiel 6 hergestellt. Die Vorschrift wurde insoweit angepaßt, daß die optischen Aufheller in der Hälfte des AE angerührt und diese Lösung mit der Hälfte der Sulfatmenge vermischt wurde. Im Lödigemischer wurde der Rset Sulfat, Phosphat, Buildersilikat aus Beispiel 6 gemischt und der Rest AE unter Mischen aufgesprüht. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 2,10 %.

### Beispiel 17

Entsprechend der allgemeinen Vorschrift "Herstellung der Testwaschmittel" wurde ein Test-Normal-Vollwaschmittel mit 27,0 % Silikat aus Beispiel 6 hergestellt. Die Vorschrift wurde insoweit angepaßt, daß im Lödigemischer der Rest Soda, die Gesamtmenge Silikat aus Beispiel 6 gemischt und mit dem Rest AE unter mischen besprüht wurde. Nachgemischt wurden Antischaum, Phosphonat und optische Aufheller. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,93 %.

### Beispiel 18

Wie in Beispiel 12 wurde entsprechend der allgemeinen Vorschrift "Herstellung der Testwaschmittel" wurde ein Test-Ultracompact-Vollwaschmittel mit 31,0 % Silikat aus Beispiel 8 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 2,30 %.

### Beispiel 19

Entsprechend der allgemeinen Vorschrift "Herstellung der Testwaschmittel" wurde ein Test-Ultracompact-Vollwaschmittel mit 12,0 % Silikat aus Beispiel 8 hergestellt. In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,55 %.

### Beispiel 20

Entsprechend der allgemeinen Vorschrift "Herstellung der Testwaschmittel" wurde ein Test-Ultracompact-Vollwaschmittel mit 15,0 % Silikat aus Beispiel 10 hergestellt. Die Vorschrift wurde insoweit angepaßt, daß kein Polymer und keine Seife eingesetzt wurden, In Modellwaschversuchen entsprechend der allgemeinen Vorschrift "Waschversuche" wurde die Bildung von anorganischen Inkrustierungen untersucht. Der Mittelwert der Asche-Werte aller fünf Gewebe beträgt 1,75 %.

### Beispiel 21

Entsprechend den allgemeinen Vorschriften "Herstellung der Testwaschmittel" und "Herstellung der Waschmitteltabletten" wurden Waschmitteltabletten bei einem Pressdruck von 30 kN gepresst. In Modellwaschversuchen entsprechend der allgemeinen Vorschrift "Waschversuche" wurde die Bildung von anorganischen Inkrustierungen untersucht. Die Dosierung betrug zwei Tabletten pro Waschgang d.h. 80 g. Der Mittelwert der Asche-Werte aller fünf Gewebe beträgt 2,25 %.

### Beispiele 22 bis 25

Entsprechend der der allgemeinen Vorschrift "Herstellung der Maschinengeschirreiniger" wurden Maschinen geschirreiniger hergestellt.

| Eingesetzte Substanzen | |
|---|---|
| Zeolith A: | Wessalith P, Fa. Degussa |
| Phosphat 1: | Natriumtripolyphosphat, Fa. Thermphos Intl. |
| Phosphat 2: | Makrophos 1018, Fa. BK Giulini |
| SKS-6 Granulat: | Schichtsilikat SKS-6 Granulat, Fa. Clariant |
| Polymer: | Sokalan CP5, Fa. BASF |
| Soda: | Schwersoda, Fa. Matthes & Weber |
| Bicarbonat: | von Fa. Solvay |
| Percarbonat: | Oxyper C, Fa. Solvay Interox |
| Perborat monohydrat: | von Fa. Degussa |
| Perborat tetrahydrat: | von Fa. Degussa |
| TAED 1: | TAED 4049, Fa. Clariant |
| TAED 2: | TAED 3873, Fa. Clariant |
| LAS: | Marlon A 375, Fa. Hüls |
| AE 1: | Genapol OAA 080, Fa. Clariant |
| AE 2: | Genapol 2822, Fa. Clariant |
| Seife: | Liga Grundseife HM11 E |
| Antischaum: | 11. Plv. ASP3, Fa. Wacker |
| Enzym 1: | Termamyl 60T, Fa. Solvay Enzymes |
| Enzym 2: | Savinase 6.0 TW, Fa. Solvay Enzymes |
| Optischer Aufheller 1: | Tinopal CBS-X, Fa. Ciba |
| Optischer Aufheller 2: | Tinopal DMS-X, Fa. Ciba |
| Phosphonat: | Dequest 2041, Fa. Monsanto |
| Citronensäure: | von Fa. Jungbunzlauer |
| Natriumcitrat tihydrat: | von Fa. Merck |
| Polyvinylpyrrolidon: | Sokalan HP50, Fa. BASF |
| Soil release Polymer: | SRC 1, Fa. Clariant |
| CMC: | Tylose 2000, Fa. Clariant |
| Cellulose: | Arbocell, Fa. Rettenmaier |
| Natriumacetat trihydrat: | von Fa. Merck KGaA |
| Parfüm: | Citronenparfüm 78122D, Fa Orissa |
| Sulfat: | von Fa. Solvay |

**Tabelle 1**

| | Beispiele | | | | | | | | | |
|---|---|---|---|---|---|---|---|---|---|---|
| | 1 (Vgl.) | 2 (Vgl.) | 3 | 4 | 5 | 6 | 7 | 8 | 9 | 10 |
| Produkt Type | Powd | Gran | Gran | Gran | Powd | Powd | Gran | Gran | Gran | Gran |
| Schüttdichte [g/l] | 589 | 912 | 770 | 939 | 645 | 704 | 835 | 860 | 881 | 962 |
| d 50 [µm] | 116 | 693 | 774 | 749 | 108 | 116 | 680 | 966 | 764 | 764 |
| Anteil > 1180 [%] | - | 1,2 | 13,4 | 12,6 - | - | - | 1,7 | 11,7 | 3,2 | 4,4 |
| Anteil > 1000 [%] | 1,9 | 13,6 | 28,3 | 26,7 - | - | - | 15,1 | 46,4 | 22,4 | 24,5 |
| Anteil > 710 [%] | - | 48,0 | 56,2 | 54,2 - | - | - | 46,4 | 77,2 | 56,3 | 55,8 |
| Anteil > 500 [%] | 9,8 | - | - | - | 3,3 | 8,8 | - | - | - | - |
| Anteil > 425 [%] | - | 80,6 | 78,8 | 80,5 - | - | - | 79,5 | 92,6 | 86,0 | 86,8 |
| Anteil > 300 [%] | 17,4 | - | - | - | 7,2 | 15,8 - | - | - | - | - |
| Anteil > 212 [%] | - | 97,4 | 95,7 | 98,5 - | - | - | 97,7 | 98,1 | 99,5 | 98,9 |
| Anteil > 150 [%] | 33,6 | 98,3 | 97,4 | 99,4 | 22,8 | 31,6 | 99,6 | 98,3 - | - | 99,1 |
| Anteil > 75 [%] | 69,9 | - | - | - | 71,8 | 72,5 | - | - | - | - |
| Anteil > 33 [%] | - | - | - | - | - | - | 100 | 100 | 100 | 100 |
| CBV [mg CaCO₃/g] | 147 | 161 | 184 | 171 | 174 | 152 | 165 | 179 | 169 | 180 |
| pH demin H2O | 11,55 | 11,64 | 11,98 | 11,95 | 11,93 | 11,92 | 11,96 | 11,98 | 12,03 | 11,99 |
| pH 17°dH H2O | 11,35 | 11,48 | 11,83 | 11,82 | 11,83 | 11,74 | 11,79 | 11,89 | 11,88 | 11,89 |
| A* [%] | 16,7 | 17,5 | 12,9 | 18,5 | 16,0 | 20,5 | 54,4 | 52,7 | 15,7 | 17,7 |
| B* [%] | 11,8 | 9,3 | 9,95 | 11,1 | 6,5 | 13,8 | 21,2 | 15,5 | 9,1 | 10,3 |
| D* [%] | 71,5 | 73,3 | 77,2 | 70,4 | 77,5 | 65,8 | 24,3 | 31,8 | 75,3 | 71,9 |
| AM* [%] | 2,0 | 12,2 | 16,9 | 12,2 | 6,7 | 13,3 | 2,4 | 31,1 | 5,3 | 14,4 |
| v | 2,00 | 2,00 | 1,45 | 1,34 | 0,84 | 0,99 | 0,08 | 1,63 | 1,68 | 1,36 |
| x | 2,00 | 2,00 | 1,89 | 1,90 | 1,88 | 1,81 | 1,88 | 1,83 | 1,90 | 1,62 |

A*, B* und C* bezeichnen jeweils den Gehalt an alpha-, beta und delta-Dinatriumdisilikat, wobei AM* für den Anteil an nicht-schichtsilikatischen (amorphen) Natriumsilikaten steht.

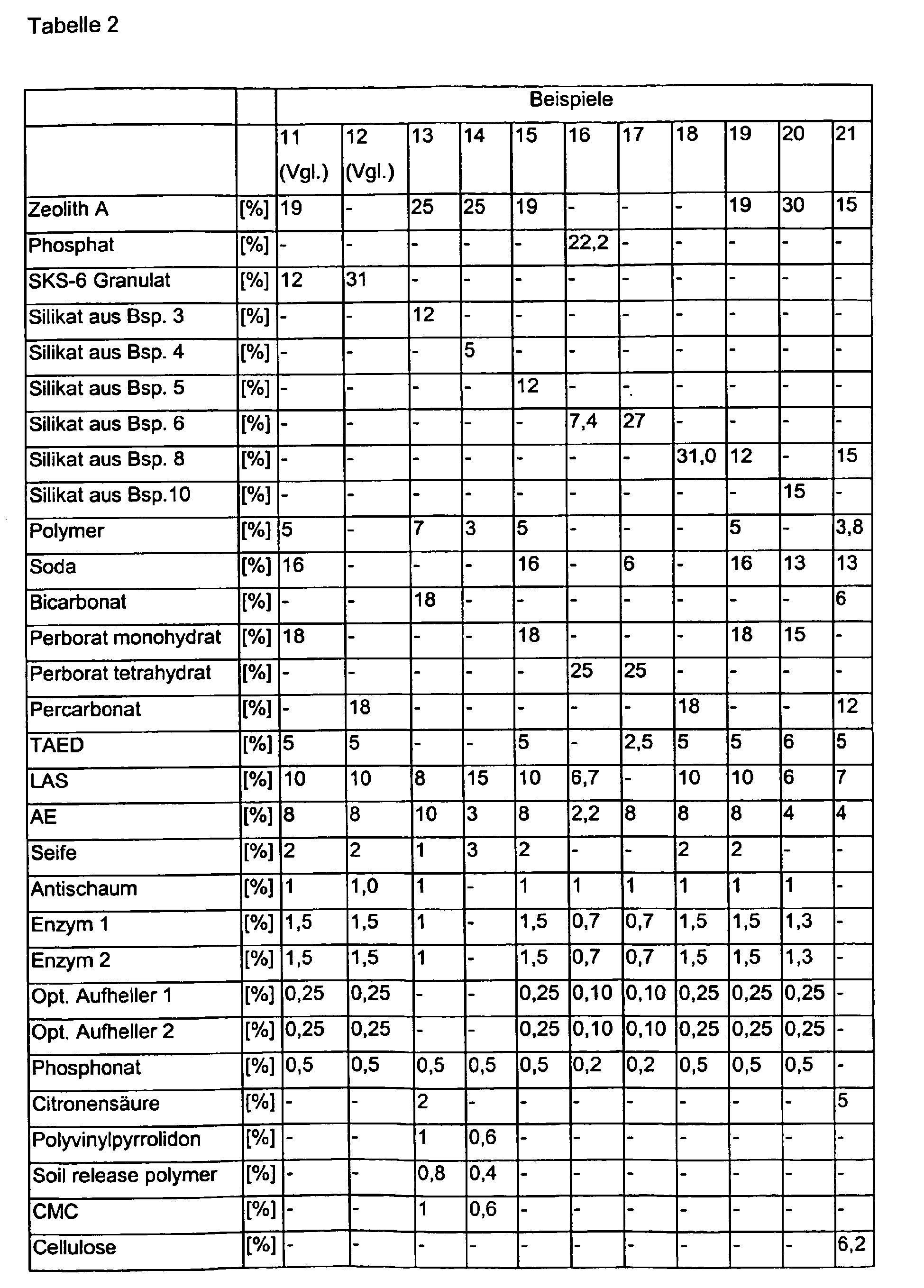

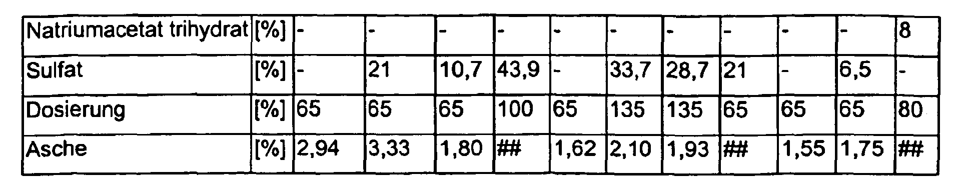

**Tabelle 3**

| | | Beispiele | | | |
|---|---|---|---|---|---|
| | | 22 | 23 | 24 | 25 |
| Phosphat 2 | [%] | - | 25 | 40 | 47 |
| Silikat aus Bsp. 8 | [%] | 20 | 15 | 15 | 5,2 |
| Soda | [%] | 22,7 | 30 | 24,7 | 27,5 |
| Natriumcitrat trihydrat | [%] | 30 | - | - | - |
| Percarbonat | [%] | 10 | - | - | - |
| Perborat monohydrat | [%] | - | 10 | 10 | 10 |
| Polymer | [%] | 7,5 | 5 | 3,5 | 3,5 |
| TAED 2 | [%] | 5 | 2 | 2 | 2 |
| Enzym 1 | [%] | 1 | 1,5 | 1 | 1 |
| Enzym 2 | [%] | 2 | 2,5 | 2 | 2 |
| AE 2 | [%] | 1,5 | 1,5 | 1,5 | 1,5 |
| Parfüm | [%] | 0,3 | 1,5 | 0,3 | 0,3 |
| Sulfat | [%] | - | 6 | - | - |
| Dosierung | [ml] | 25 | 25 | 25 | 25 |

## Patentansprüche

1. Hochalkalisches kristallines Natriumsilikat der Zusammensetzung
Na₂O * x SiO₂ * y H₂O
wobei x eine Zahl zwischen 1,2 und 2,1 und y eine Zahl zwischen 0 und 20 ist und das hochalkalische kristalline Natriumdisilikat zu 70 bis 98 Gew.-% aus schichtförmigen Dinatriumdisilikaten und zu 2 bis 30 Gew.-% aus nicht-schichtsilikatischen Natriumsilikaten der Formel
Na₂O * v SiO₂ * w H₂O
in der v eine Zahl zwischen 0,05 und 2 und w eine Zahl zwischen 0 und 20 ist, besteht.

2. Hochalkalisches kristallines Natriumsilikat nach Anspruch 1, **dadurch gekennzeichnet, dass** v eine Zahl zwischen 0,1 und 1,95 ist.

3. Hochalkalisches kristallines Natriumsilikat nach Anspruch 1 oder 2, **dadurch gekennzeichnet, dass** v eine Zahl zwischen 0,2 und 1,9 ist.

4. Hochalkalisches kristallines Natriumsilikat nach einem oder mehreren der Ansprüche 1 bis 3, **dadurch gekennzeichnet, dass** x eine Zahl zwischen 1,5 und 2,0 ist.

5. Hochalkalisches kristallines Natriumsilikat nach einem oder mehreren der Ansprüche 1 bis 4, **dadurch gekennzeichnet, dass** x eine Zahl zwischen 1,6 und 1,95 ist.

6. Hochalkalisches kristallines Natriumsilikat nach einem oder mehreren der Ansprüche 1 bis 5, **dadurch gekennzeichnet, daß** das schichtförmige Dinatriumdisilikat aus
1 bis 70 Gew.-% alpha-Dinatriumdisilikat,
0,5 bis 50 Gew.-% beta-Dinatriumdisilikat und
5 bis 98 Gew.-% delta-Dinatriumdisilikat
besteht.

7. Hochalkalisches kristallines Natriumsilikat nach einem oder mehreren der Ansprüche 1 bis 6, **dadurch gekennzeichnet, dass** das schichtförmige Dinatriumdisilikat aus
5 bis 50 Gew.-% alpha-Dinatriumdisilikat,
1 bis 30 Gew.-% beta-Dinatriumdisilikat und
10 bis 90 Gew.-% delta-Dinatriumdisilikat
besteht.

8. Hochalkalisches kristallines Natriumsilikat nach einem oder mehreren der Ansprüche 1 bis 7, **dadurch gekennzeichnet, dass** das schichtförmige Dinatriumdisilikat aus
7 bis 30 Gew.-% alpha-Dinatriumdisilikat,
3 bis 20 Gew.-% beta-Dinatriumdisilikat und
15 bis 77 Gew.-% delta-Dinatriumdisilikat
besteht.

9. Hochalkalisches kristallines Natriumsilikat nach einem oder mehreren der Ansprüche 1 bis 8, **dadurch gekennzeichnet, dass** es, bezogen auf den Alkalisilikatgehalt, bis zu 10 Gew.-% an weiteren Bestandteilen enthält.

10. Hochalkalisches kristallines Natriumsilikat nach einem oder mehreren der Ansprüche 1 bis 9, **dadurch gekennzeichnet, dass** es sich bei den weiteren Bestandteilen um kationische und/oder anionische Bestandteile handelt.

11. Hochalkalisches kristallines Natriumsilikat nach einem oder mehreren der Ansprüche 1 bis 10, **dadurch gekennzeichnet, dass** es sich bei den kationischen Bestandteilen um Alkalimetallionen und/oder Erdalkalimetallkationen und/oder Fe, W, Mo, Ta, Pb, Sn, Al, Zn, Ti, V, Cr, Mn, Co und/oder Ni handelt.

12. Hochalkalisches kristallines Natriumsilikat nach einem oder mehreren der Ansprüche 1 bis 10, **dadurch gekennzeichnet, dass** es sich bei den anionischen Bestandteilen um Sulfate, Fluoride, Chloride, Bromide, Iodide, Carbonate, Hydrogencarbonate, Nitrate, Oxidhydrate, Phosphate und/oder Borate handelt.

13. Hochalkalisches kristallines Natriumsilikat nach einem oder mehreren der Ansprüche 1 bis 12, **dadurch gekennzeichnet, dass** es bis zu 10 Mol-% Bor, bezogen auf den Gesamtgehalt an SiO₂, enthält.

14. Hochalkalisches kristallines Natriumsilikat nach einem oder mehreren der Ansprüche 1 bis 13, **dadurch gekennzeichnet, dass** es bis zu 50 Mol-% Phosphor, bezogen auf den Gesamtgehalt an SiO₂, enthält.

15. Hochalkalisches kristallines Natriumsilikat nach einem oder mehreren der Ansprüche 1 bis 14, **dadurch gekennzeichnet, dass** es als Pulver einen mittleren Teilchendurchmesser von 0,1 bis 600 µm aufweist.

16. Hochalkalisches kristallines Natriumsilikat nach einem oder mehreren der Ansprüche 1 bis 15, **dadurch gekennzeichnet, dass** es als Pulver einen mittleren Teilchendurchmesser von 0,1 bis 150 µm aufweist.

17. Hochalkalisches kristallines Natriumsilikat nach einem oder mehreren der Ansprüche 1 bis 14, **dadurch gekennzeichnet, dass** es als kompaktiertes Granulat einen mittleren Teilchendurchmesser von 10 bis 2000 µm aufweist.

18. Wasch und Reinigungsmittel, **dadurch gekennzeichnet, dass** es ein hochalkalisches kristallines Natriumsilikat nach einem oder mehreren der Ansprüche 1 bis 17 enthält.

19. Wasch und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% Cobuilder,
ad 100 Gew.-% weitere übliche Inhaltsstoffe enthält.

20. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% Cobuilder,
0,5 bis 80 Gew.-% pH-Regulatoren,
ad 100 Gew.-% weitere übliche Inhaltsstoffe enthält.

21. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% Cobuilder,
0,5 bis 80 Gew.-% pH-Regulatoren,
1 bis 50 Gew.-% grenzflächenaktive Substanzen,
ad 100 Gew.-% weitere übliche Inhaltsstoffe enthält.

22. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% Cobuilder,
0,5 bis 80 Gew.-% pH-Regulatoren,
1 bis 50 Gew.-% grenzflächenaktive Substanzen,
1 bis 70 Gew.-% Bleichsystem,
ad 100 Gew.-% weitere übliche Inhaltsstoffe enthält.

23. Wasch- und Reinigungsmittel nach Anspruch 18, **dadurch gekennzeichnet, daß** es
0,5 bis 98 Gew.-% hochalkalisches kristallines Natriumsilikat
0,5 bis 80 Gew.-% Cobuilder,
0,5 bis 80 Gew.-% pH-Regulatoren,
1 bis 70 Gew.-% Bleichsystem,
ad 100 Gew.-% weitere übliche Inhaltsstoffe enthält.

24. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% pH-Regulatoren,
1 bis 50 Gew.-% grenzflächenaktive Substanzen,
1 bis 70 Gew.-% Bleichsystem,
ad 100 Gew.-% weitere übliche Inhaltsstoffe enthält.

25. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% pH-Regulatoren,
1 bis 70 Gew.-% Bleichsystem,
ad 100 Gew.-% weitere übliche Inhaltsstoffe enthält.

26. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% pH-Regulatoren,
1 bis 40 Gew.-% grenzflächenaktive Substanzen,
ad 100 Gew.-% weitere übliche Inhaltsstoffe enthält.

27. Wasch- und Reinigungsmittel nach Anspruch 18, **dadurch gekennzeichnet, dass** es
0,5 bis 98 Gew.-% hochalkalisches kristallines Natriumsilikat,
0,5 bis 80 Gew.-% pH-Regulatoren,
ad 100 Gew.-% weitere übliche Inhaltsstoffe enthält.

28. Wasch- und Reinigungsmittel nach Anspruch 18, **dadurch gekennzeichnet, dass** es
0,5 bis 98 Gew.-% hochalkalisches kristallines Natriumsilikat,
1 bis 70 Gew.-% Bleichsystem,
ad 100 Gew.-% weitere übliche Inhaltsstoffe enthält.

29. Wasch- und Reinigungsmittel nach einem oder mehreren der Ansprüche 18 bis 28, **dadurch gekennzeichnet, dass** es 1 bis 50 Gew.-% an hochalkalischem kristallinem Natriumsilikat enthält.

30. Wasch- und Reinigungsmittel nach einem oder mehreren der Ansprüche 18 bis 28, **dadurch gekennzeichnet, dass** es 3 bis 30 Gew.-% an hochalkalischem kristallinem Natriumsilikat enthält.

31. Wasch- und Reinigungsmittel nach einem oder mehreren der Ansprüche 18 bis 28, **dadurch gekennzeichnet, dass** es 60 bis 98 Gew.-% an hochalkalischem kristallinem Natriumsilikat enthält.

32. Wasch- und Reinigungsmittel nach einem oder mehreren der Ansprüche 18 bis 28 **dadurch gekennzeichnet, dass** es 70 bis 98 Gew.-% an hochalkalischem kristallinem Natriumsilikat enthält.

33. Wasch- und Reinigungsmittel nach einem oder mehreren der Ansprüche 18 bis 32, **dadurch gekennzeichnet, dass** es sich bei dem Cobuilder um kristalline Aluminosilikate, mono-, oligo- oder polymere Carbonsäuren, Alkalicarbonate, Alkaliortho-, -pyro-, polyphosphate, kristalline Alkalisilikate mit einem Kristallgitter ohne Schichtstruktur und/oder amorphe Alkalisilikate handelt.

34. Wasch- und Reinigungsmittel nach einem oder mehreren der Ansprüche 18 bis 33, **dadurch gekennzeichnet, dass** es sich bei dem Bleichsystem um Aktivchlor-und/oder Aktivsauerstoffträger, Bleichaktivator, -katalysator, zur Entfermung von Verfärbungen einsetzbare Enzyme, Perborat und/oder Percarbonat handelt.

35. Wasch- und Reinigungsmittel nach einem oder mehreren der Ansprüche 18 bis 34, **dadurch gekennzeichnet, dass** es sich bei den grenzflächenaktiven Substanzen um anionische, kationische, nicht-ionische und/oder zwitterionischeTenside handelt.

36. Wasch- und Reinigungsmittel nach einem oder mehreren der Ansprüche 18 bis 35, **dadurch gekennzeichnet, dass** es sich bei den pH-Regulatoren um Soda, Citronensäure, Natriumcitrat und/oder Bicarbonat handelt.

## Claims

1. A highly alkaline crystalline sodium silicate of the composition
Na₂O * x SiO₂ * y H₂O
where x is a number between 1.2 and 2.1 and y is a number between 0 and 20, and the highly alkaline crystalline sodium disilicate comprises 70 to 98% by weight of sheet disodium disilicates and 2 to 30% by weight of non-phyllosilicatic sodium silicates of the formula
Na₂O * v SiO₂ * w H₂O
in which v is a number between 0.05 and 2 and w is a number between 0 and 20.

2. The highly alkaline crystalline sodium silicate as claimed in claim 1, wherein v is a number between 0.1 and 1.95.

3. The highly alkaline crystalline sodium silicate as claimed in claim 1 or 2, wherein v is a number between 0.2 and 1.9.

4. The highly alkaline crystalline sodium silicate as claimed in one or more of claims 1 to 3, wherein x is a number between 1.5 and 2.0.

5. The highly alkaline crystalline sodium silicate as claimed in one or more of claims 1 to 4, wherein x is a number between 1.6 and 1.95.

6. The highly alkaline crystalline sodium silicate as claimed in one or more of claims 1 to 5, wherein the sheet disodium disilicate consists of
1 to 70% by weight of alpha-disodium disilicate,
0.5 to 50% by weight of beta-disodium disilicate and
5 to 98% by weight of delta-disodium disilicate.

7. The highly alkaline crystalline sodium silicate as claimed in one or more of claims 1 to 6, wherein the sheet disodium disilicate consists of
5 to 50% by weight of alpha-disodium disilicate,
1 to 30% by weight of beta-disodium disilicate and
10 to 90% by weight of delta-disodium disilicate.

8. The highly alkaline crystalline sodium silicate as claimed in one or more of claims 1 to 7, wherein the sheet disodium disilicate consists of
7 to 30% by weight of alpha-disodium disilicate,
3 to 20% by weight of beta-disodium disilicate and
15 to 77% by weight of delta-disodium disilicate.

9. The highly alkaline crystalline sodium silicate as claimed in one or more of claims 1 to 8, which comprises, based on the alkali metal silicate content, up to 10% by weight of further constituents.

10. The highly alkaline crystalline sodium silicate as claimed in one or more of claims 1 to 9, wherein the further constituents are cationic and/or anionic constituents.

11. The highly alkaline crystalline sodium silicate as claimed in one or more of claims 1 to 10, wherein the cationic constituents are alkali metal ions and/or alkaline earth metal cations and/or Fe, W, Mo, Ta, Pb, Sn, Al, Zn, Ti, V, Cr, Mn, Co and/or Ni.

12. The highly alkaline crystalline sodium silicate as claimed in one or more of claims 1 to 10, wherein the anionic constituents are sulfates, fluorides, chlorides, bromides, iodides, carbonates, hydrogencarbonates, nitrates, oxide hydrates, phosphates and/or borates.

13. The highly alkaline crystalline sodium silicate as claimed in one or more of claims 1 to 12, which comprises up to 10 mol% of boron, based on the total content of SiO₂.

14. The highly alkaline crystalline sodium silicate as claimed in one or more of claims 1 to 13, which comprises up to 50 mol% of phosphorus, based on the total content of SiO₂.

15. The highly alkaline crystalline sodium silicate as claimed in one or more of claims 1 to 14, which has, as a powder, a mean particle diameter of from 0.1 to 600 µm.

16. The highly alkaline crystalline sodium silicate as claimed in one or more of claims 1 to 15, which has, as a powder, a mean particle diameter of from 0.1 to 150 µm.

17. The highly alkaline crystalline sodium silicate as claimed in one or more of claims 1 to 14, which has, as a compacted granulate, a mean particle diameter of from 10 to 2000 µm.

18. A detergent and cleaner which comprises a highly alkaline crystalline sodium silicate as claimed one or more of claims 1 to 17.

19. The detergent and cleaner as claimed in claim 18, which comprises
0.5 to 98% by weight of highly alkaline crystalline sodium silicate,
0.5 to 80% by weight of cobuilders,
ad 100% by weight of further customary ingredients.

20. The detergent and cleaner as claimed in claim 18, which comprises
0.5 to 98% by weight of highly alkaline crystalline sodium silicate,
0.5 to 80% by weight of cobuilders,
0.5 to 80% by weight of pH regulators,
ad 100% by weight of further customary ingredients.

21. The detergent and cleaner as claimed in claim 18, which comprises
0.5 to 98% by weight of highly alkaline crystalline sodium silicate,
0.5 to 80% by weight of cobuilders,
0.5 to 80% by weight of pH regulators,
1 to 50% by weight of surface-active substances,
ad 100% by weight of further customary ingredients.

22. The detergent and cleaner as claimed in claim 18, which comprises
0.5 to 98% by weight of highly alkaline crystalline sodium silicate,
0.5 to 80% by weight of cobuilders,
0.5 to 80% by weight of pH regulators,
1 to 50% by weight of surface-active substances,
1 to 70% by weight of a bleaching system,
ad 100% by weight of further customary ingredients.

23. The detergent and cleaner as claimed in claim 18, which comprises 0.5 to 98% by weight of highly alkaline crystalline sodium silicate,
0.5 to 80% by weight of cobuilders,
0.5 to 80% by weight of pH regulators,
1 to 70% by weight of a bleaching system,
ad 100% by weight of further customary ingredients.

24. The detergent and cleaner as claimed in claim 18, which comprises 0.5 to 98% by weight of highly alkaline crystalline sodium silicate,
0.5 to 80% by weight of pH regulators,
1 to 50% by weight of surface-active substances,
1 to 70% by weight of a bleaching system,
ad 100% by weight of further customary ingredients.

25. The detergent and cleaner as claimed in claim 18, which comprises 0.5 to 98% by weight of highly alkaline crystalline sodium silicate,
0.5 to 80% by weight of pH regulators,
1 to 70% by weight of a bleaching system,
ad 100% by weight of further customary ingredients.

26. The detergent and cleaner as claimed in claim 18, which comprises 0.5 to 98% by weight of highly alkaline crystalline sodium silicate,
0.5 to 80% by weight of pH regulators,
1 to 40% by weight of surface-active substances,
ad 100% by weight of further customary ingredients.

27. The detergent and cleaner as claimed in claim 18, which comprises 0.5 to 98% by weight of highly alkaline crystalline sodium silicate,
0.5 to 80% by weight of pH regulators,
ad 100% by weight of further customary ingredients.

28. The detergent and cleaner as claimed in claim 18, which comprises 0.5 to 98% by weight of highly alkaline crystalline sodium silicate,
1 to 70% by weight of a bleaching system,
ad 100% by weight of further customary ingredients.

29. The detergent and cleaner as claimed in one or more of claims 18 to 28, which comprises 1 to 50% by weight of highly alkaline crystalline sodium silicate.

30. The detergent and cleaner as claimed in one or more of claims 18 to 28, which comprises 3 to 30% by weight of highly alkaline crystalline sodium silicate.

31. The detergent and cleaner as claimed in one or more of claims 18 to 28, which comprises 60 to 98% by weight of highly alkaline crystalline sodium silicate.

32. The detergent and cleaner as claimed in one or more of claims 18 to 28, which comprises 70 to 98% by weight of highly alkaline crystalline sodium silicate.

33. The detergent and cleaner as claimed in one or more of claims 18 to 32, wherein the cobuilders are crystalline aluminosilicates, mono-, oligo or polymeric carboxylic acids, alkali metal carbonates, alkali metal ortho-, pyro- or polyphosphates, crystalline alkali metal silicates having a crystal lattice without a sheet structure and/or amorphous alkali metal silicates.

34. The detergent and cleaner as claimed in one or more of claims 18 to 33, wherein the bleaching system is an active chlorine and/or active oxygen carrier, bleach activator, bleach catalyst, enzymes which can be used to remove discolorations, perborate and/or percarbonate.

35. The detergent and cleaner as claimed in one or more of claims 18 to 34, wherein the surface-active substances are anionic, cationic, nonionic and/or zwitterionic surfactants.

36. The detergent and cleaner as claimed in one or more of claims 18 to 35, wherein the pH regulators are soda, citric acid, sodium citrate and/or bicarbonate.

## Revendications

1. Silicate de sodium cristallin à haute alcalinité, de composition
Na₂O* x SiO₂ * y H₂O
où x est un nombre compris entre 1,2 et 2,1 et y est un nombre compris entre 0 et 20, et le disilicate de sodium cristallin à haute alcalinité est constitué de 70 à 98 % en poids de silicates disodiques lamellaires et de 2 à 30 % en poids de silicates de sodium non phyllosilicatés de formule
Na₂O * v SiO₂ * w H₂O
dans laquelle v est un nombre compris entre 0,05 et 2, et w est un nombre compris entre 0 et 20.

2. Silicate de sodium cristallin à haute alcalinité selon la revendication 1, **caractérisé en ce que** v est un nombre compris entre 0,1 et 1,95.

3. Silicate de sodium cristallin à haute alcalinité selon la revendication 1 ou 2, **caractérisé en ce que** v est un nombre compris entre 0,2 et 1,9.

4. Silicate de sodium cristallin à haute alcalinité selon l'une ou plusieurs des revendications 1 à 3, **caractérisé en ce que** x est un nombre compris entre 1,5 et 2,0.

5. Silicate de sodium cristallin à haute alcalinité selon l'une ou plusieurs des revendications 1 à 4, **caractérisé en ce que** x est un nombre compris entre 1,6 et 1,95.

6. Silicate de sodium cristallin à haute alcalinité selon l'une ou plusieurs des revendications 1 à 5, **caractérisé en ce que** le disilicate disodique lamellaire est constitué
de 1 à 70 % en poids de disilicate disodique alpha,
de 0,5 à 50 % en poids de disilicate disodique bêta, et
de 5 à 98 % en poids de disilicate disodique delta.

7. Silicate de sodium cristallin à haute alcalinité selon l'une ou plusieurs des revendications 1 à 6, **caractérisé en ce que** le disilicate disodique lamellaire est constitué
de 5 à 50 % en poids de disilicate disodique alpha,
de 1 à 30 % en poids de disilicate disodique bêta, et
de 10 à 90 % en poids de disilicate disodique delta.

8. Silicate de sodium cristallin à haute alcalinité selon l'une ou plusieurs des revendications 1 à 7, **caractérisé en ce que** le disilicate disodique lamellaire est constitué
de 7 à 30 % en poids de disilicate disodique alpha,
de 3 à 20 % en poids de disilicate disodique bêta, et
de 15 à 77 % en poids de disilicate disodique delta.

9. Silicate de sodium cristallin à haute alcalinité selon l'une ou plusieurs des revendications 1 à 8, **caractérisé en ce qu'**il contient, par rapport au silicate d'un métal alcalin présent, jusqu'à 10 % en poids d'autres constituants.

10. Silicate de sodium cristallin à haute alcalinité selon l'une ou plusieurs des revendications 1 à 9, **caractérisé en ce que**, pour ce qui concerne les autres constituants, il s'agit de constituants cationiques et/ou anioniques.

11. Silicate de sodium cristallin à haute alcalinité selon l'une ou plusieurs des revendications 1 à 10, **caractérisé en ce que**, pour ce qui concerne les constituants cationiques, il s'agit d'ions de métaux alcalins et/ou de cations de métaux alcalino-terreux, et/ou de Fe, W, Mo, Ta, Pb, Sn, Al, Zn, Ti, V, Cr, Mn, Co et/ou Ni.

12. Silicate de sodium cristallin à haute alcalinité selon l'une ou plusieurs des revendications 1 à 10, **caractérisé en ce que**, pour ce qui concerne les constituants anioniques, il s'agit de sulfates, de fluorures, de chlorures, de bromures, d'iodures, de carbonates, d'hydrogénocarbonates, de nitrates, d'oxydes hydratés, de phosphates et/ou de borates.

13. Silicate de sodium cristallin à haute alcalinité selon l'une ou plusieurs des revendications 1 à 12, **caractérisé en ce qu'**il contient jusqu'à 10 % en moles de bore par rapport à la quantité totale de SiO₂.

14. Silicate de sodium cristallin à haute alcalinité selon l'une ou plusieurs des revendications 1 à 13, **caractérisé en ce qu'**il contient jusqu'à 50 % en moles de phosphore par rapport à la quantité totale de SiO₂.

15. Silicate de sodium cristallin à haute alcalinité selon l'une ou plusieurs des revendications 1 à 14, **caractérisé en ce que**, sous forme de poudre, il présente une granulométrie moyenne de 0,1 à 600 µm.

16. Silicate de sodium cristallin à haute alcalinité selon l'une ou plusieurs des revendications 1 à 15, **caractérisé en ce que**, sous forme de poudre, il présente une granulométrie moyenne de 0,1 à 150 µm.

17. Silicate de sodium cristallin à haute alcalinité selon l'une ou plusieurs des revendications 1 à 14, **caractérisé en ce que**, sous forme de granulés compactés, il présente une granulométrie moyenne de 10 à 2000 µm.

18. Agent lavant et nettoyant, **caractérisé en ce qu'**il contient un silicate de sodium cristallin à haute alcalinité selon l'une ou plusieurs des revendications 1 à 17.

19. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
le complément à 100 % en poids d'autres constituants usuels.

20. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
de 0,5 à 80 % en poids de régulateurs de pH,
le complément à 100 % en poids d'autres constituants usuels.

21. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
0,5 à 80 % en poids de régulateurs de pH,
1 à 50 % en poids de substances tensioactives,
le complément à 100 % en poids d'autres constituants usuels.

22. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
de 0,5 à 80 % en poids de régulateurs de pH,
de 1 à 50 % en poids de substances tensioactives,
de 1 à 70 % en poids d'un système de blanchiment,
le complément à 100 % en poids d'autres constituants usuels.

23. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
de 0,5 à 80 % en poids de régulateurs de pH,
de 1 à 70 % en poids d'un système de blanchiment,
le complément à 100 % en poids d'autres constituants usuels.

24. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids d'un co-adjuvant,
de 1 à 50 % en poids de substances tensioactives,
de 1 à 70 % en poids d'un système de blanchiment,
le complément à 100 % en poids d'autres constituants usuels.

25. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids de régulateurs de pH,
de 1 à 70 % en poids d'un système de blanchiment
le complément à 100 % en poids d'autres constituants usuels.

26. Agent lavant et nettoyant selon la revendication 18, **caractérisé en ce qu'**il contient
de 0,5 à 98 % en poids d'un silicate de sodium cristallin à haute alcalinité,
de 0,5 à 80 % en poids de régulateurs de pH,
de 1 à 40 % en poids de substances tensioactives
le complément à 100 % en poids d'autres constituants usuels.

27. Agent lavant et nettoyant selon la revendication 18, **caractérisé en ce qu'**il contient
de 0,5 à 98 % en poids de silicate de sodium cristallin à haute alcalinité,
de 0,5 à 80 % en poids de régulateurs de pH,
le complément à 100 % en poids d'autres constituants usuels.

28. Agent lavant et nettoyant selon la revendication 18, **caractérisé en ce qu'**il contient
de 0,5 à 98 % en poids de silicate de sodium cristallin à haute alcalinité,
de 1 à 70 % en poids d'un système de blanchiment,
le complément à 100 % en poids d'autres constituants usuels.

29. Agent lavant et nettoyant selon l'une ou plusieurs des revendications 18 à 28, **caractérisé en ce qu'**il contient de 1 à 50 % en poids de silicate de sodium cristallin à haute alcalinité.

30. Agent lavant et nettoyant selon l'une ou plusieurs des revendications 18 à 28, **caractérisé en ce qu'**il contient de 3 à 30 % en poids de silicate de sodium cristallin à haute alcalinité.

31. Agent lavant et nettoyant selon l'une ou plusieurs des revendications 18 à 28, **caractérisé en ce qu'**il contient de 60 à 98 % en poids de silicate de sodium cristallin à haute alcalinité.

32. Agent lavant et nettoyant selon l'une ou plusieurs des revendications 18 à 28, **caractérisé en ce qu'**il contient de 70 à 98 % en poids de silicate de sodium cristallin à haute alcalinité.

33. Agent lavant et nettoyant selon l'une ou plusieurs des revendications 18 à 32, **caractérisé en ce que**, pour ce qui concerne le co-adjuvant, il s'agit d'aluminosilicates cristallins, d'acides carboxyliques mono-, oligo- ou polymères, de carbonates de métaux alcalins, d'ortho-, de pyro-, de polyphosphates de métaux alcalins, de silicates de métaux alcalins cristallins ayant un réseau cristallin sans structure lamellaire, et/ou de silicates de métaux alcalins amorphes.

34. Agent lavant et nettoyant selon l'une ou plusieurs des revendications 18 à 33, **caractérisé en ce que**, pour ce qui concerne le système de blanchiment, il s'agit d'un produit contenant du chlore actif et/ou de l'oxygène actif, d'un activateur de blanchiment, d'un catalyseur de blanchiment, d'enzymes utilisables pour éliminer les changements de couleur, d'un perborate et/ou d'un percarbonate.

35. Agent lavant et nettoyant selon l'une ou plusieurs des revendications 18 à 34, **caractérisé en ce que**, pour ce qui concerne les substances tensioactives, il s'agit de tensioactifs anioniques, cationiques, non ioniques et/ou zwittérioniques.

36. Agent lavant et nettoyant selon l'une ou plusieurs des revendications 18 à 35, **caractérisé en ce que**, pour ce qui concerne les régulateurs de pH, il s'agit de carbonate de sodium, d'acide citrique, de citrate de sodium et/ou de bicarbonate.
